# FASCICULE DE BREVET EUROPEEN

(11) **EP 1 402 727 B1**
(45) Date de publication et mention de la délivrance du brevet: **16.12.2009**
(21) Numéro de dépôt: 02732837.6
(22) Date de dépôt: 25.04.2002
(51) Int. Cl.: H04N 5/93, H04N 5/92

(54) **PROCEDE DE CONTROLE DE LA VISUALISATION D'EMISSIONS AUDIOVISUELLES**
VERFAHREN ZUR ÜBERWACHUNG DER ANZEIGE VON AUDIOVISUELLEN SENDUNGEN
METHOD FOR CONTROLLING DISPLAY OF AUDIO-VISUAL PROGRAMMES, AND RECEIVER FOR DISPLAYING SAME

(30) Priorité: 25.04.2001 FR 0105566
(43) Date de publication de la demande: 31.03.2004
(73) Titulaire: Thomson Licensing, 92100 Boulogne-Billancourt (FR)
(72) Inventeur: SCHAEFER, Ralf, F-35690 Acigné (FR); CHAMPEL, Mary-Luc, F-35220 Marpiré (FR); ORHAND, Anita, F-35000 Rennes (FR)
(74) Mandataire: Kohrs, Martin
(86) Numéro de dépôt international: PCT/FR2002/001417
(87) Numéro de publication internationale: WO 2002/087234

(56) Documents cités:
- EP-A- 0 711 076
- WO-A-00/35193
- WO-A-01/58158
- GB-A- 2 141 907
- PATENT ABSTRACTS OF JAPAN vol. 1999, no. 13, 30 novembre 1999 (1999-11-30) & JP 11 237865 A (FUJITSU GENERAL LTD), 31 août 1999 (1999-08-31)
- PATENT ABSTRACTS OF JAPAN vol. 1996, no. 09, 30 septembre 1996 (1996-09-30) & JP 08 115066 A (EKUSHINGU:KK;BROTHER IND LTD), 7 mai 1996 (1996-05-07)

## Description

L'invention concerne un procédé de contrôle de la visualisation d'émission audiovisuelle par un récepteur, et un récepteur apte à les visualiser. L'invention concerne plus particulièrement les récepteurs dotés de moyens d'enregistrement.

De nos jours, de nombreux appareils permettent de visualiser des émissions audiovisuelles diffusées à partir d'un réseau de diffusion ou téléchargées d'un réseau numérique à haut débit. Parmi ces appareils, on trouve les écrans de télévision haute définition, les récepteurs de télévision comprenant de façon intégrée un moyen de réception d'émissions et un écran, les récepteurs permettant de recevoir des émissions et de les envoyer vers un écran. L'utilisateur peut aussi visualiser une émission en local à partir d'une unité d'enregistrement, comme par exemple un magnétoscope permettant d'enregistrer une émission sur bande magnétique. Récemment, d'autres moyens de stockage sont apparus permettant d'enregistrer avec une grande souplesse d'utilisation. Ces moyens sont par exemple, le lecteur/enregistreur de DVD (ou DVD-RAM selon une terminologie anglo-saxonne), ou le disque dur (ou « Hard Disk » selon une terminologie anglo-saxonne, HDD en abrégé). Ces moyens permettent d'enregistrer des émissions reçues en temps réel d'un réseau de diffusion. L'accès aux séquences audiovisuelles enregistrées est très rapide en utilisant l'indexation des données, ce qui n'était pas possible pour une bande magnétique qu'il faut dérouler avant d'atteindre une séquence précise. L'intégration d'un moyen d'enregistrement dans un récepteur augmente son coût.

La demande de brevet EP 711 076 décrit un système de communication interactive incitant un utilisateur à regarder des publicités et capable de recueillir la réaction de l'utilisateur en réponse à ces séquences publicitaires. La demande de brevet GB 2 141 907 décrit un jeu vidéo contrôlé par un moyen de paiement tel qu'un monnayeur à pièces. Des séquences publicitaires sont enregistrées et automatiquement incorporées dans les séquences vidéo du jeu. La demande de brevet japonaise JP10041777 décrit un moyen pour détecter la présence d'un utilisateur devant son écran de télévision et un moyen pour changer le contenu affiché en fonction de l'utilisateur regardant l'écran. Le contenu affiché peut être des séquences publicitaires. La demande de brevet japonaise JP06250738 décrit un moyen pour afficher une séquence publicitaire sur un écran de visualisation destiné à une application de « Karaoké », un détecteur de présence fait changer le contenu de l'écran et permet de l'utiliser le temps d'un morceau musical.

Dans le monde de consommation où nous vivons actuellement, la publicité détient une place importante, le budget lié à cette activité est considérable dans le domaine de l'audiovisuel. Les annonceurs publicitaires payent des droits aux diffuseurs pour la diffusion de messages publicitaires qui seront visualisés par les utilisateurs. Ces messages publicitaires sont envoyés entre deux émissions audiovisuelles, ou au milieu d'une émission. Des chaînes de télévision et des diffuseurs de programmes sont en grande partie financés par les droits de diffusion payés par les annonceurs publicitaires. Si les messages sont diffusés à l'aide d'un réseau de diffusion unidirectionnel, les diffuseurs ne connaissent pas le nombre d'utilisateurs présents devant leurs postes lors de la diffusion des émissions. Ils utilisent les sondages pour connaître le taux d'audience, mais cette information est toujours approximative.

La présente invention a pour objet de proposer une autre alternative à un utilisateur désireux d'acquérir et d'utiliser un récepteur d'émissions audiovisuelles doté d'un moyen d'enregistrement. Cette alternative permet d'acquérir et d'utiliser un tel appareil en réduisant son droit d'acquisition pour l'utilisateur.

L'invention permet également aux publicitaires de disposer d'un nouveau moyen de diffusion de leurs messages publicitaires. De plus, lorsque les utilisateurs utilisent normalement le récepteur et voient les messages publicitaires, les annonceurs publicitaires connaissent potentiellement à l'avance la quantité de messages vus et le nombre d'utilisateurs touchés par les messages.

L'invention propose un procédé de contrôle de la visualisation d'émissions audiovisuelles par un récepteur doté d'un moyen d'enregistrement d'émissions audiovisuelles, **caractérisé en ce qu**'il comporte les étapes suivantes :
- enregistrement d'au moins une première émission sélectionnée par l'utilisateur;
   et consécutivement à une action de l'utilisateur pour visualiser la première émission enregistrée :
- lecture d'au moins une seconde émission pré-enregistrée dans le moyen d'enregistrement ;
- visualisation de ladite seconde émission avant la fin de la visualisation de la première émission pendant une durée mémorisée dans le récepteur, la visualisation de la seconde émission étant une condition pour visualiser la première émission.

De cette façon, l'obligation pour l'utilisateur de visualiser de façon concomitante des premières et secondes émissions est la contrepartie de la visualisation des émissions enregistrées. Les secondes émissions sont typiquement des messages publicitaires proposés par des annonceurs publicitaires. Ainsi, en utilisant le procédé ci-dessus, un utilisateur peut acquérir auprès d'un distributeur, un appareil capable de mémoriser et de visualiser des messages publicitaires, l'acquisition s'effectuant avec une réduction du coût grâce aux droits prospectifs correspondant aux messages qui seront visualisés par cet appareil.

Selon un premier mode de réalisation particulier, la visualisation des premières émissions s'effectue au cours de périodes successives. La durée de visualisation de la seconde émission est soit fonction de la durée de visualisation cumulée des secondes émissions déjà visualisées au cours de la période précédente, soit fonction de la durée de visualisation cumulée des secondes émissions déjà visualisées au cours de l'actuelle période.

Selon un autre mode de réalisation particulier, le procédé comporte une étape de comptage des visualisations d'une au moins seconde émission, et une étape d'effacement de la seconde émission en mémoire du récepteur lorsque le compteur atteint une certaine valeur. On peut ainsi libérer de la mémoire dont le contenu est devenu inutile et garantir à l'annonceur publicitaire un nombre précis de visualisation pour chaque message.

Selon un autre mode de réalisation particulier, le procédé comporte une étape de visualisation dite « libre » au cours de laquelle l'utilisateur peut voir des premières émissions tout en n'étant pas obligé de voir des secondes émissions. Cette étape de visualisation libre intervient après une durée d'utilisation du récepteur déterminée, cette durée étant fixée lors de la mise en service du récepteur par l'utilisateur.

Selon un autre mode de réalisation particulier, l'étape de visualisation libre intervient après une durée déterminée cumulée de visualisation de secondes émissions, cette durée étant fixée lors de la mise en service du récepteur par l'utilisateur. Un perfectionnement consiste en ce que la durée de visualisation d'un seconde émission prise en compte dans le calcul du cumul augmente lorsque la seconde émission est interactive. Un autre perfectionnement consiste en ce que le procédé comporte une étape de détection de la présence d'au moins un utilisateur devant son écran. Si le détecteur ne détecte pas la présence d'un utilisateur à proximité du récepteur, la durée de visualisation de secondes émissions n'est pas prise en compte dans le calcul du cumul.

Selon un autre mode de réalisation particulier, le procédé comporte une étape d'introduction d'un profil utilisateur. Les informations de profil permettent de filtrer au cours de l'étape de lecture des secondes émissions une partie au moins des secondes émissions.

L'invention propose également un récepteur d'émissions audiovisuelles comprenant un moyen de réception de premières émissions audiovisuelles, un moyen de visualisation et un moyen de mémorisation pour visualiser et enregistrer des premières émissions audiovisuelles, lesdites premières émissions étant enregistrées suite à une commande de l'utilisateur, **caractérisé en ce qu**'il comporte un moyen de contrôle associé au moyen de mémorisation, des secondes émissions étant enregistrées par le moyen de contrôle sans intervention de l'utilisateur, le moyen de contrôle autorisant la lecture et la visualisation des premières émissions si des secondes émissions sont lues et visualisées avant la fin de la visualisation des premières émissions pendant une durée mémorisée dans le récepteur.

La présente invention apparaîtra maintenant avec plus de détails dans le cadre de la description qui suit d'exemples de réalisation donnés à titre illustratif en se référant aux figures annexées qui représentent :
- la figure 1 est un diagramme bloc d'un récepteur audiovisuel pour la mise en oeuvre de l'invention,
- la figure 2 présente les différentes parties du moteur d'exécution,
- la figure 3 montre le contenu du disque dur,
- la figure 4 montre un organigramme général du déroulement du moteur d'exécution,
- les figures 5.a, 5.b, 5.c, 5.d et 5.e représentent des apparences d'écran pour la mise en oeuvre de l'invention,
- la figure 6 représente un organigramme d'exécution d'un élément de perfectionnement de l'invention.

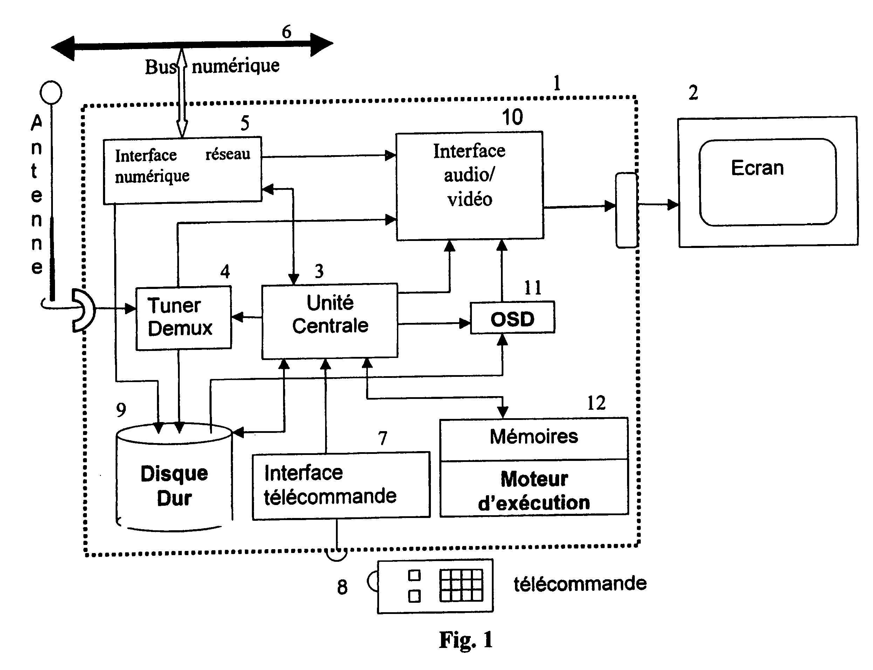

On décrira tout d'abord à l'aide de la figure 1, le fonctionnement d'un récepteur audiovisuel 1 muni d'un dispositif d'affichage 2. Le récepteur comprend une unité centrale 3 reliée à une mémoire 12 de programme (ROM) et de travail (RAM), et une interface 5 pour la communication avec un bus numérique local à haut débit 6 permettant de transmettre des données audio/vidéo en temps réel. Ce réseau est par exemple un réseau IEEE 1394. Le récepteur peut également recevoir des données audio/vidéo d'un réseau de diffusion à travers une antenne de réception associée à un démodulateur 4. Le récepteur comprend en outre un récepteur de signaux infrarouge 7 pour recevoir les signaux d'une télécommande 8, un moyen de mémorisation 9 pour le stockage d'émission audiovisuelle, et une logique de décodage audio/vidéo 10 pour la génération des signaux audiovisuels envoyés à l'écran de télévision 2. La nature des émissions audiovisuelles étant numérique, le moyen de mémorisation 9 est de préférence un disque dur (HDD), il peut aussi être un lecteur/enregistreur de disque optique enregistrable (DVD-RAM).

La télécommande 8 est dotée des touches de direction ↑ ↓, → et ← et des touches : « OK » et « Select» dont nous verrons plus tard la fonction. Le récepteur dispose également d'une horloge (non représentée) permettant de comptabiliser des durées individuellement ou au cours d'une période telle qu'une heure ou un mois.

Le récepteur comprend également un circuit 11 d'affichage de données sur l'écran, appelé souvent circuit OSD, de l'anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée), ou qui permet de mélanger deux contenus audiovisuels. Le circuit OSD est contrôlé par l'Unité Centrale 3 et un moteur d'exécution contenu dans la mémoire 12. Le Moteur d'Exécution, en abrégé ME dans la suite du document, est typiquement constituée d'un module de programme résident en mémoire morte et de paramètres enregistrés en mémoire de travail. Le ME peut aussi être réalisé sous la forme d'un circuit spécialisé de type ASIC par exemple. Ce circuit peut être doté de fonctions sécuritaires dont nous verrons la fonction dans la suite du document.

Le récepteur reçoit des données représentant des émissions audiovisuelles du bus numérique 6 et/ou du réseau de diffusion. A l'aide d'un EPG (Guide Electronique de Programme) et des touches de sa télécommande, l'utilisateur sélectionne des émissions et commande l'enregistrement dans le disque dur 9.

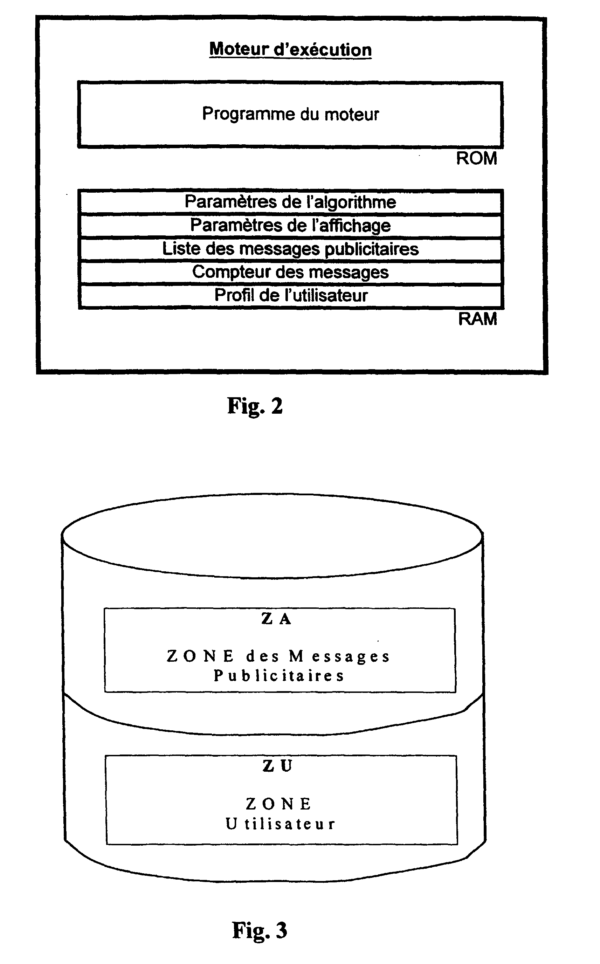

Le moteur d'exécution ME, comme le montre la figure 2 comprend deux parties, la première est le programme exécutable (écrit en mémoire ROM du récepteur), la seconde est une zone de paramètres en mémoire de travail RAM sauvegardée du récepteur. Le programme exécutable réalise les fonctions suivantes, certaines sont optionnelles :
- Contrôle et gestion des échanges avec le disque dur.
- Contrôle de l'émission des messages publicitaires à l'aide d'un algorithme de sélection.
- Gestion de l'affichage des messages publicitaires.
- Modification du profil de l'utilisateur (option).
- Sélection de messages publicitaires selon le profil de l'utilisateur (option).
- Mise à jour des messages publicitaires enregistrés (option).

Les paramètres utilisés par le moteur d'exécution concernent :
- La programmation de l'algorithme de sélection des messages publicitaires.
- Les paramètres d'affichage de l'interface utilisateur.
- L'état de la campagne d'émission des messages publicitaires.
- Le profil d'un ou plusieurs utilisateurs du récepteur.
- La liste des messages publicitaires à visualiser et les pointeurs permettant de les extraire du disque dur.

La mémoire du disque dur, représentée à la figure 3 est partagée en deux zones : la première zone (ZU) est utilisable par l'utilisateur pour le stockage des émissions qu'il sélectionne, et la seconde (ZA) est utilisée pour le stockage des messages publicitaires fournis par les annonceurs. Lorsque l'utilisateur fait l'acquisition du récepteur, la première partie est vierge, la seconde peut déjà contenir des messages publicitaires ou peut être vierge, dans ce dernier cas, les messages publicitaires seront enregistrés dès l'installation du dispositif chez l'utilisateur.

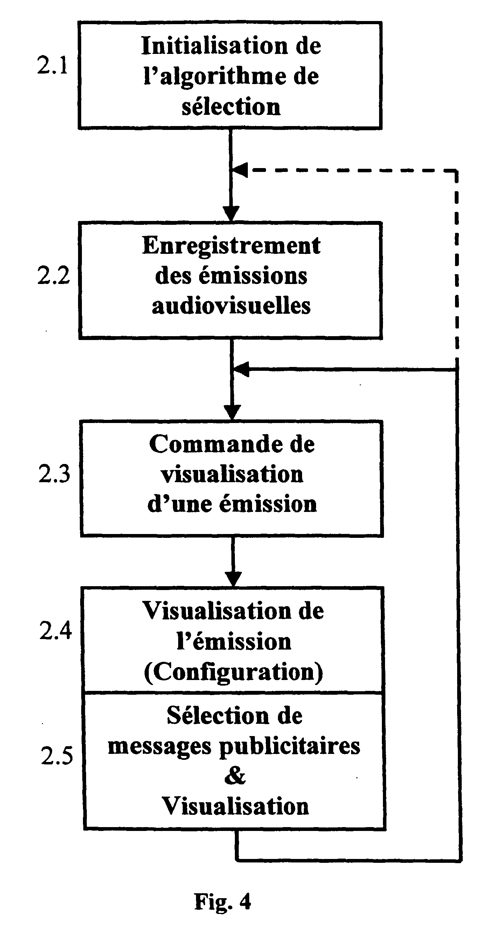

Après avoir détaillé les différents éléments de l'invention, nous allons maintenant expliquer comment ils coopèrent. La figure 4 montre un organigramme général du déroulement du moteur d'exécution.

Le distributeur de récepteurs s'associe avec un ou plusieurs annonceurs de messages publicitaires qui lui envoient des messages publicitaires. D'autre part, il calcule un coût pour l'appareil et calcule le nombre et la durée de messages publicitaires dont la somme des droits de diffusion est égale à ce coût. Au cours d'une première étape 4.1, il écrit dans la zone des paramètres de l'algorithme en mémoire RAM du récepteur, les paramètres relatifs au nombre et à la durée calculés. Le distributeur configure également le mode d'affichage des messages. Il peut aussi enregistrer les premiers messages publicitaires dans la zone ZA du disque dur, mais ce n'est pas obligatoire car les messages peuvent être enregistrés par la suite chez l'utilisateur. Le récepteur dûment configuré, le distributeur propose aux utilisateurs de les acquérir.

Pour conclure l'acquisition du récepteur, l'utilisateur s'engage à l'utiliser d'une certaine manière. Le distributeur lui propose deux options :
- Option A - La quantité de messages publicitaires est fixe, par exemple 2 heures par mois maximum.
- Option B - La quantité de messages publicitaires est fonction de l'utilisation du récepteur, par exemple 5 minutes chaque heure d'utilisation.

L'option A permet à quelqu'un qui utilise beaucoup son appareil de payer les droits d'acquisition rapidement et au bout d'un certain temps, de ne plus voir de messages publicitaires envoyés par le ME. Supposons par exemple que ces droits sont égaux à ceux consistant à voir 12 heures de messages publicitaires, un utilisateur regardant pendant 3 heures par mois de tels messages, pourra au bout de 4 mois, voir les émissions enregistrées dans son récepteur sans être obligé de regarder des messages publicitaires envoyés par le ME. De cette façon, en fonctionnement normal, c'est à dire avec l'utilisateur devant son écran, l'annonceur connaît lors de l'acquisition du récepteur la quantité potentielle de messages qui sera vue par l'utilisateur.

L'option B concerne des personnes qui utilisent moins souvent leurs récepteurs. Il faudra alors une plus longue durée pour visualiser la durée de messages publicitaires prévue. Cette durée au cours duquel le ME est susceptible d'envoyer des messages dépend uniquement de l'utilisation du récepteur.

Lorsque l'utilisateur met sous tension le récepteur, le ME est automatiquement lancé et va dans un premier temps charger les paramètres de la mémoire RAM sauvegardée. Ensuite, le ME est sollicité lors de chaque accès au disque dur. Par exemple, l'utilisateur lance un EPG, sélectionne une émission et programme un enregistrement dans le disque dur. Au début de l'étape 4.2 d'enregistrement, le moteur d'exécution calcule l'adresse d'un emplacement disponible dans la zone ZU où sont ensuite écrites les données audiovisuelles de l'émission. Puis à l'étape 4.3, l'utilisateur désire visualiser cette émission et lance une commande de visualisation du contenu audiovisuel du disque dur. A l'étape 4.4, le moteur d'exécution lit l'émission et envoie les signaux audiovisuels vers l'écran. A l'étape 4.5, le ME décide de lire un message publicitaire et de l'envoyer à l'écran. L'envoi vers l'écran des messages publicitaires est déterminé par l'algorithme de sélection écrit au sein du moteur d'exécution et par les paramètres inscrits lors de l'acquisition du récepteur. Par exemple, les paramètres peuvent être la visualisation de 3 minutes de messages publicitaires à chaque heure de visualisation d'émission enregistrée.

L'envoi à l'écran des données audiovisuelles est contrôlé par le ME et non par l'utilisateur. Pour éviter la fraude consistant à détourner certains signaux électriques pour éviter l'affichage des messages publicitaires, l'OSD et/ou le ME est doté de fonctions de sécurité. L'affichage du message publicitaire s'effectue selon une des manières qui vont être décrites par la suite, le choix étant laissé de préférence à l'utilisateur, et est possible soit au moment où il fait l'acquisition de son appareil, soit lors de son utilisation grâce à une fonction accessible par un menu. L'exécution de l'algorithme de sélection dépend du choix de l'option et des paramètres enregistrés dans la mémoire RAM du ME.

Les messages publicitaires ont généralement une durée de vie courte, c'est pourquoi le récepteur fait ensuite des mises à jour et enregistre des nouveaux messages publicitaires. Les plus vieux messages sont remplacés par des messages provenant du réseau de diffusion ou du bus numérique 6. Le distributeur peut ainsi à travers l'un ou l'autre réseau, transmettre de nouveaux messages publicitaires à l'intention des récepteurs. La mise à jour des messages publicitaires est contrôlée par le ME. Les messages publicitaires étant enregistrés sur le récepteur, l'envoi de ces messages peut se faire à n'importe quel moment de la journée et a fortiori aux moments les moins coûteux pour le diffuseur (la nuit par exemple).

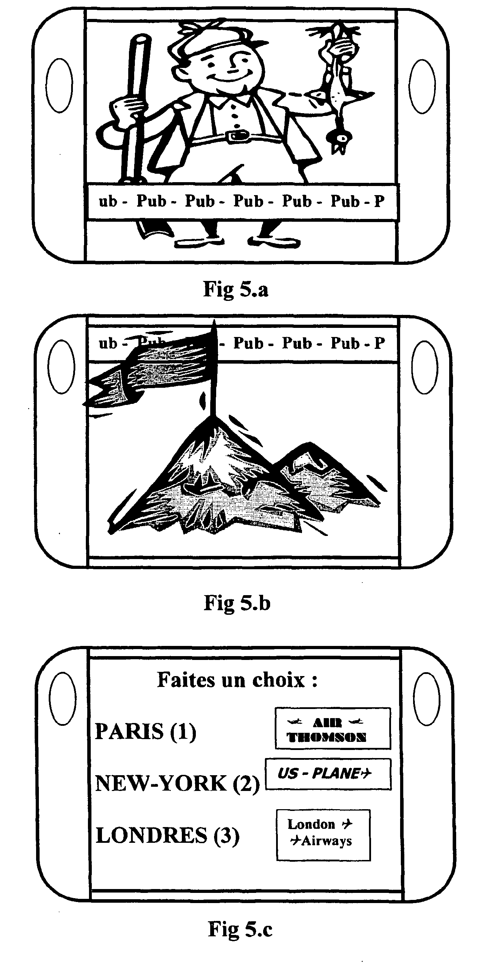

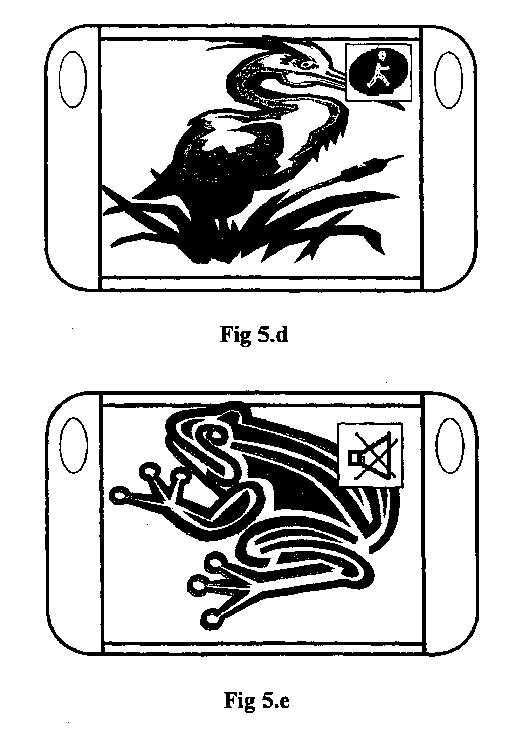

Les messages publicitaires sont lus du disque dur 9 et envoyés à l'écran avant la fin de la visualisation de l'émission audiovisuelle sélectionnée par l'utilisateur. Si les deux contenus audiovisuels sont affichés en même temps sur l'écran, le mélange des signaux s'effectue au niveau du circuit OSD à l'aide de technique d'incrustation. Par exemple, si le message publicitaire est affiché sur un bandeau, il occupe typiquement 30 lignes de l'écran (qui en compte 625). Le ME lit la mémoire de stockage des messages publicitaires, transforme les messages en images et les envoie au circuit O.S.D en spécifiant la position sur l'écran du bandeau. La visualisation des messages publicitaires au cours des émissions audiovisuelles peut s'effectuer de différentes manières, illustrées par les figures 5.a, 5.b, 5.c, 5.d, 5.e :

### ■ Visualisation par bandeau publicitaire

La manière la plus simple d'afficher le message, décrite par la figure 5.a, est le bandeau publicitaire qui occupe une zone de l'écran. Le message peut défiler de différentes manières dans ce bandeau. Le message apparaît fixe dans le bandeau pendant un certain temps, il est ensuite remplacé par un autre. Cette première manière de faire est utilisable lorsque tout le message publicitaire peut être affiché dans le bandeau. Une seconde manière consiste à faire défiler un même message plusieurs fois avant de le remplacer par un autre. Une autre manière est de faire apparaître les messages à intervalles réguliers, de telle sorte que entre deux messages, toute la zone utile de l'écran est occupée pour le signal vidéo. Une autre manière consiste à faire afficher aléatoirement la zone d'affichage du bandeau publicitaire. Le fond du bandeau peut être opaque masquant ainsi une partie de l'émission audiovisuelle, il peut aussi être transparent.

Dans le premier mode de réalisation, le distributeur de récepteur choisit la position du bandeau publicitaire : en haut de l'écran ou en bas, les messages défilant horizontalement ; ou, sur le coté, les messages défilant alors verticalement. Un perfectionnement consiste en ce que la position du bandeau puisse être modifiée par l'utilisateur. Ce dernier utilise alors les flèches de direction de la télécommande, l'appui sur la flèche ↑ positionne le bandeau en haut, la flèche ↓ positionne le bandeau en bas, les flèches ← et → positionnent le bandeau à gauche ou à droite. Tous les paramètres d'affichage sont inscrits dans la zone « paramètres de l'affichage » dans la partie en RAM du ME.

### ■ Visualisation au cours du film

Dans le cas précédent illustré par la figure 5.b, l'utilisateur visualise les messages publicitaires en même temps que l'émission qu'il a sélectionnée. Dans ce cas, l'émission est interrompue le temps de visualisation des messages publicitaires et reprendra ensuite. Si le ME l'autorise (cette option peut être activée par le distributeur et/ou l'annonceur publicitaire), l'utilisateur peut choisir le moment de visualisation des messages publicitaires, par exemple, au début, au cours ou à la fin de l'émission. Lorsque l'utilisateur souhaite regarder un film qu'il a préalablement enregistré, le ME affiche un menu lui permettant de choisir la façon dont il souhaite visualiser les messages publicitaires. Une fois que tous les messages publicitaires ont été visualisés, le ME n'émet plus de messages publicitaires jusqu'à la fin de la visualisation de l'émission sélectionnée. Mais, l'utilisateur pourrait être tenté de s'absenter lors de la visualisation des messages publicitaires, et ne revenir qu'au moment de la visualisation de son émission, ce qui n'est pas dans l'esprit du contrat qui le lie avec le distributeur associé avec l'annonceur publicitaire. Pour parer ce comportement, un perfectionnement de l'invention consiste à doter le récepteur d'un détecteur de présence qui permet de s'assurer de la présence de l'utilisateur en face de son écran. Nous expliquerons par la suite, comment fonctionne un tel détecteur

Dans les deux manières d'afficher qui viennent d'être présentées, l'utilisateur a un rôle passif, c'est le ME qui lui impose l'affichage des messages. Les autres manières qui vont suivre possèdent plus de souplesse, car l'utilisateur peut autoriser ou non la visualisation des messages.

### ■ Visualisation avec séquences d'interactivité

Certaines émissions audiovisuelles sont des applications interactives. Lors de leur visualisation, l'utilisateur peut modifier le déroulement de l'émission à l'aide de commandes prévues par le diffuseur et élaborées sur la télécommande du récepteur. C'est le cas par exemple, lors de jeux télévisés, ou pour modifier le scénario de film. De la même façon que pour les applications interactives, le moteur d'exécution propose un choix à l'utilisateur, qui peut ainsi modifier la façon de visualiser les messages publicitaires. Comme le montre l'exemple illustré par la figure 5.c, l'utilisateur peut choisir le sujet du message publicitaire qui l'intéresse le mieux, en l'occurrence ici la destination d'un voyage, le logo de la compagnie aérienne est affichée à coté.

La visualisation d'applications publicitaires interactives est contraignante pour l'utilisateur qui doit agir en réponse aux questions. De ce fait, le ME accorde en échange plus de droits pour l'utilisateur que ceux correspondant à la visualisation de messages publicitaires classiques pour la même durée de visualisation.

### ■ Visualisation commandée par icône

Ce cas, illustré par la figure 5.d, consiste à faire afficher une icône sur l'écran, indiquant ainsi à l'utilisateur qu'il a la possibilité de visualiser un message publicitaire à ce moment. A l'aide de la touche « OK » de sa télécommande, l'utilisateur valide l'icône, ce qui interrompt la visualisation de l'émission sélectionnée et lance celle du message publicitaire. L'icône clignote à l'écran soit dès le début, soit au bout d'un certain temps, ce clignotement est une incitation ou un rappel pour l'utilisateur à autoriser la visualisation des messages publicitaires. Si l'utilisateur ne valide pas cette icône au bout d'un certain temps, le ME interrompt la visualisation de l'émission et l'image sur l'écran est figée tant que l'utilisateur ne valide pas l'icône. Une autre action possible du ME et de lancer, sans validation de la part de l'utilisateur, la visualisation des messages publicitaires. Après la visualisation, l'icône disparaît. Relativement à la dernière action décrite, le ME ne comptabilise pas la publicité comme ayant été vue et peut au bout d'un certain la proposer de nouveau.

### ■ Visualisation forcée par coupure du son

Dans ce cas, illustré par la figure 5.e, et dans le but d'inciter l'utilisateur à autoriser la visualisation des messages (ou tout simplement à lui rappeler), le son est coupé et une icône représentant le symbole d'un haut-parleur barré apparaît à l'écran. Lorsque l'utilisateur appuie sur la touche « OK », il valide le choix de regarder le prochain message publicitaire. Tant que l'utilisateur n'a pas validé, le son reste coupé.

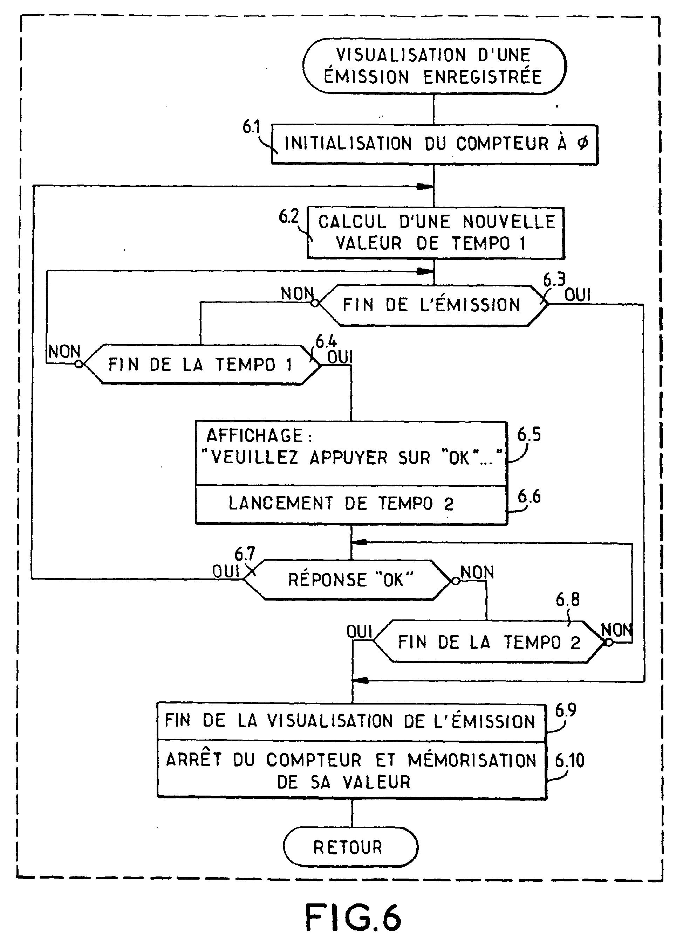

Nous avons évoqué précédemment le fait qu'il n'est pas sûr que l'utilisateur soit devant son écran et ainsi qu'il voit les messages publicitaires. Cet aspect est important car cette visualisation conditionne l'acquisition du récepteur. Un perfectionnement consiste en ce que le ME intègre un détecteur de présence de l'utilisateur. Ce perfectionnement est décrit en référence à la figure 6.

L'organigramme de la figure 6 présente un algorithme intégré au ME pour la détection de présence de l'utilisateur au cours de la visualisation d'une émission. A l'étape 6.1, le programme initialise un compteur à 0. Ce compteur permet de comptabiliser le temps passé à regarder l'émission et le message publicitaire. A l'étape 6.2, le programme calcule la valeur d'une première temporisation TEMPO 1. La valeur de cette temporisation est de façon privilégiée contrôlée par le distributeur. De façon particulièrement simple, elle est fixe, cinq minutes par exemple. Une variante consiste à la rendre aléatoire, variant entre deux limites, cinq minutes à dix minutes par exemple. Une autre variante consiste en ce que l'apparition du message soit déclenchée par le ME. Puis, le programme teste si la fin de l'émission est atteinte (étape 6.3). Si ce n'est pas le cas, la fin de la temporisation 1 est testée (étape 6.4) et le programme reboucle tant que les deux tests sont négatifs. Lorsque la fin de la temporisation 1 est atteinte, le programme à l'étape 6.5 affiche en plein milieu de l'écran le message suivant :

| |
|---|
| Si vous voulez continuer à visualiser l'émission, veuillez appuyer sur la touche « OK ». Taper une autre touche pour interrompre la visualisation». |

Puis une seconde temporisation est lancée (étape 6.6), définissant une durée au cours de laquelle l'utilisateur peut répondre. Si l'utilisateur appuie sur la touche « OK » signalant de ce fait sa présence (étape 6.7), le programme saute à l'étape 6.2 et l'utilisateur peut continuer de voir son émission. Tant que l'utilisateur n'a pas répondu correctement et que la seconde temporisation n'est pas terminée, le programme reboucle (étape 6.8). Lorsque la fin de la seconde temporisation est atteinte sans que l'utilisateur ait signalé sa présence, le programme arrête la visualisation de l'émission (étape 6.9). Puis, il stoppe le compteur de temps et additionne sa valeur à celle déjà écrite dans la mémoire 12 (étape 6.10). La valeur écrire représente la durée où l'utilisateur est considéré présent devant son téléviseur. Les messages publicitaires visualisés pendant ce temps là sont considéré vus par l'utilisateur. Un perfectionnement consiste en ce que, durant la seconde temporisation, le récepteur émette un signal auditif en accompagnement du message affiché à l'écran, par exemple un son particulier ou une mélodie. De cette façon, si l'utilisateur est distrait et ne regarde pas à ce moment son écran, il peut quand même être averti qu'il doit réagir s'il veut que l'appareil reconnaisse sa présence.

L'organigramme de la figure 6 montre un exemple de réalisation d'un détecteur de présence. Il existe d'autres dispositifs permettant de détecter la présence d'un individu devant un récepteur. On peut, par exemple, utiliser des détecteurs infrarouges ou hyperfréquence, ou encore une caméra dotée d'un dispositif de reconnaissance de forme. Ce dernier dispositif ayant l'avantage de reconnaître le ou les individus, et d'élaborer ensuite des calculs statistiques sur le comportement des utilisateurs devant la diffusion de tels ou tels messages publicitaires.

Une autre variante d'applications publicitaires interactives consiste à poser des questions concernant les derniers messages publicitaires visualisés. Supposons par exemple qu'un message publicitaire pour un nouveau jus de fruit appelé « Borno » ait été visualisé, quelques minutes plus tard, le ME affiche le message suivant :

| Rappelez-vous la dernière publicité : | | |
|---|---|---|
| « BORNO » : est-ce | le nom d'une voiture......... | [1] |
| | une marque de jus de fruit .... | [2] |
| | l'appellation d'un shampoing. | [3] |
| veuillez répondre en appuyant sur la touche indiquée. | | |

Si l'utilisateur répond rapidement et correctement, le moteur d'exécution considère que l'utilisateur a prouvé qu'il était présent lors de la visualisation des derniers messages publicitaires. Dans le cas contraire, l'utilisateur n'a pas vraiment regardé la publicité, il n'a acquis aucun droit. De même que lors de la visualisation des messages publicitaires avec séquences d'interactivité, l'utilisateur peut être récompensé de ses réponses par l'acquisition de droits supplémentaires.

Selon un autre mode de fonctionnement, si l'utilisateur a déjà visualisé la durée totale des messages correspondant aux droits d'acquisition de l'appareil, le ME n'émet plus de messages publicitaires lors de la visualisation d'émissions enregistrées. La zone ZA disparaît du disque dur qui est alors totalement consacré à l'enregistrement des émissions sélectionnées par l'utilisateur. Cela ne signifie pas que le récepteur n'enverra plus de messages publicitaires car ceux-ci pourront toujours être reçus au cours d'une réception normale de programme, mais ces messages ne seront pas émis par le ME. Selon un perfectionnement, le distributeur peut également prévoir une durée limitée de l'engagement, par exemple un an. Après cette durée, le récepteur est libre d'être utilisé sans obligation de visualiser de la publicité.

Selon un autre perfectionnement, le droit conféré par la diffusion d'un message publicitaire dépend de son type. Des messages qui procurent aux annonceurs un service ou un avantage supplémentaire de celui d'annoncer simplement un produit, sont facturés avec un supplément, et donc les droits conférés par leurs visualisations sont supérieurs à ceux correspondant à des simples messages d'une durée égale. Par exemple, la visualisation d'une application publicitaire interactive, où l'utilisateur donne un avis sur le produit mis en valeur par le message, procure à l'annonceur une information très utile que le diffuseur facture ensuite à l'annonceur. De ce fait, la diffusion de tels messages représente un droit de diffusion supérieur à celui d'un message publicitaire non interactif et d'une durée égale. Par exemple, un message interactif d'une minute équivaut en termes de droits de diffusion à un message non interactif de deux minutes. Ce perfectionnement permet de valoriser l'action de l'utilisateur sans pour autant le forcer à être présent (s'il n'est pas actif il perd les droits supplémentaires conférés par de tels messages, dans l'exemple précédent, s'il n'est pas présent le ME comptabilise qu'une minute de visualisation au lieu de deux ).

Selon un autre perfectionnement, la durée de visualisation des messages publicitaires par unité de temps décroît au fur et à mesure de l'utilisation du récepteur au cours d'une période. Considérons par exemple une période d'une journée, lors de la première heure de visualisation, l'algorithme de sélection commande l'émission de 15 minutes de messages publicitaires. Au cours de la deuxième heure, l'algorithme commande 5 minutes d'émission, puis au-delà de la quatrième heure, aucune émission de messages publicitaires n'est commandé. Le jour suivant, l'algorithme récupère les paramètres de départ: 15 minutes au cours de la première heure, 5 minutes au cours des secondes et troisièmes heures, et aucun message à partir de la quatrième heure. Ces paramètres sont écrits dans la mémoire RAM allouée au ME. Selon un autre perfectionnement, la quantité de messages publicitaires varie en fonction de la quantité de messages déjà visualisés. Par exemple, si l'utilisation a regardé de la publicité pendant 1 heure durant un mois et que son engagement lors de l'acquisition est de visualiser 2 heures de messages publicitaires par mois, le ME enverra 3 heures de publicité au cours du mois suivant.

Selon un autre perfectionnement, les messages publicitaires sont associés à des compteurs de visualisation initialisés à une valeur déterminée. Cette valeur diminue d'une unité à chaque visualisation du message associé au compteur. Lorsque la valeur devient nulle, le message est effacé de la mémoire libérant ainsi de la place. Cet effacement peut être mis à profit pour augmenter la taille de la zone ZU, ou pour enregistrer de nouveaux messages publicitaires. Ce perfectionnement permet de gérer un nombre précis de visualisation pour chaque message.

Selon un autre perfectionnement, une partie au moins (par exemple 50%) des messages publicitaires sont filtrés pour qu'ils correspondent au profil de l'utilisateur. Le profil de l'utilisateur, écrit dans une zone de la mémoire RAM sauvegardée, contient une liste de thèmes préférés par l'utilisateur. Le contenu audiovisuel des messages publicitaires est associé à une information de thème caractérisant le message. La prise en compte du profil consiste à ne sélectionner que les messages publicitaires dont au moins un thème correspond à un de ceux de l'utilisateur. Le filtrage des messages intervient soit au moment de l'enregistrement des messages dans la zone ZA, soit au moment de la lecture des messages de la zone ZA. Un perfectionnement de ce dernier perfectionnement consiste en ce que le récepteur possède un moyen de détermination de l'identité de l'utilisateur. Par exemple, ce moyen consiste à introduire à l'aide de la télécommande un numéro d'identification lors de la mise sous tension. Ce moyen de détermination peut aussi être un dispositif optique reconnaissant à l'aide d'une caméra l'utilisateur qui est devant le récepteur. Ce moyen peut être le même que celui évoqué précédemment pour détecter la présence de l'utilisateur devant le récepteur au cours de la visualisation des messages publicitaires.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

## Revendications

1. Procédé de contrôle de la visualisation d'émissions audiovisuelles par un récepteur doté d'un moyen d'enregistrement d'émissions audiovisuelles, comportant les étapes suivantes :
- enregistrement d'au moins une première émission sélectionnée par l'utilisateur;
et consécutivement à une action de l'utilisateur pour visualiser la première émission enregistrée :
- lecture d'une au moins seconde émission pré-enregistrée dans le moyen d'enregistrement;
- **caractérisé en ce qu'**il comporte l'étape de visualisation de ladite seconde émission avant la fin de la visualisation de la première émission pendant une durée mémorisée dans le récepteur, la visualisation de la seconde émission étant une condition pour visualiser la première émission.

2. Procédé de contrôle selon la revendication 1, **caractérisé en ce que** la visualisation des premières émissions s'effectue au cours de périodes successives, et **en ce que** la durée déterminée de visualisation de la seconde émission dépend de la durée de visualisation cumulée des secondes émissions déjà visualisées au cours de la période précédente.

3. Procédé de contrôle selon la revendication 1, **caractérisé en ce que** la visualisation des premières émissions s'effectue au cours de périodes successives, et **en ce que** la durée déterminée de visualisation de la seconde émission dépend de la durée de visualisation cumulée des secondes émissions déjà visualisées au cours de l'actuelle période.

4. Procédé de contrôle selon la revendication 1, **caractérisé en ce qu'**il comporte une étape de comptage des visualisations d'une au moins seconde émission, et une étape d'effacement de ladite seconde émission en mémoire du récepteur lorsque le compteur atteint une certaine valeur.

5. Procédé de contrôle selon l'une quelconque des revendications précédentes, **caractérisé en ce qu'**il comporte une étape de visualisation libre des premières émissions enregistrées, **caractérisé en ce que** la dite étape de visualisation libre intervient après un temps déterminé d'utilisation, ce temps étant déterminé lors de la mise en service du récepteur par l'utilisateur.

6. Procédé de contrôle selon la revendication 5, **caractérisé en ce que** le temps déterminé d'utilisation est calculé à partir du cumul des durées de visualisation de secondes émissions.

7. Procédé de contrôle selon la revendication 6, **caractérisé en ce que** la durée de visualisation d'un seconde émission prise en compte dans le calcul du cumul augmente lorsque la seconde émission est interactive

8. Procédé de contrôle selon les revendications 6 ou 7, **caractérisé en ce qu'**il comporte en outre une étape de détection de la présence d'utilisateur, la durée de visualisation de secondes émissions au cours desquels une absence d'utilisateur est détectée n'est pas prise en compte dans le calcul du cumul.

9. Procédé de contrôle selon l'une quelconque des revendications précédentes, **caractérisé en ce qu'**il comporte en outre une étape d'introduction d'un profil de l'utilisateur, ledit profil filtrant au cours de l'étape de lecture des secondes émissions une partie au moins des secondes émissions.

10. procédé de contrôle de la visualisation d'émissions audiovisuelles par un récepteur selon l'une quelconque des revendications précédentes **caractérisé en ce que** les secondes émissions pré-enregistrées sont publicitaires et **en ce que** le prix d'achat dudit récepteur baisse en fonction de la durée mémorisée de visualisation des secondes émissions..

11. Récepteur (1) d'émissions audiovisuelles comprenant un moyen de réception de premières émissions audiovisuelles (4,5), un moyen de visualisation (10) et un moyen de mémorisation (9) pour visualiser et enregistrer des premières émissions audiovisuelles, lesdites premières émissions étant enregistrées suite à une commande de l'utilisateur, **caractérisé en ce qu'**il comporte un moyen de contrôle (ME) associé au moyen de mémorisation (9), des secondes émissions étant enregistrées par le moyen de contrôle (ME) sans intervention de l'utilisateur, le moyen de contrôle (ME) autorisant la lecture et la visualisation des premières émissions si des secondes émissions sont lues et visualisées avant la fin de la visualisation des premières émissions pendant une durée mémorisée dans le récepteur.

12. Récepteur selon la revendication 11 **caractérisé en ce qu'**il comporte un compteur de temps de visualisation effective de secondes émissions au cours de périodes successives, la durée déterminée de visualisation de secondes émissions dépend de la durée de visualisation effective au cours de la période précédente.

13. Récepteur selon la revendication 11 **caractérisé en ce qu'**il comporte un compteur de temps de visualisation effective de secondes émissions au cours de périodes successives, la durée déterminée de visualisation de secondes émissions dépend de la durée de visualisation de secondes émissions déjà effectuée au cours de la période courante.

14. Récepteur selon la revendication 11 **caractérisé en ce qu'**il comporte une pluralité de compteurs de visualisation associés aux secondes émissions, et un moyen d'effacement de la seconde émission lorsque le compteur associé atteint une valeur prédéterminée.

15. Récepteur selon l'une quelconque des revendications 11 à 14 **caractérisé en ce qu'**il comporte une horloge permettant de calculer la durée d'utilisation du récepteur depuis la mise en service du récepteur, le moyen de contrôle autorisant la lecture et la visualisation des premières émissions sans commander de visualisation de secondes émissions lorsque la durée d'utilisation indique qu'un temps déterminé s'est écoulé.

16. Récepteur selon la revendication 15 **caractérisé en ce que** l'horloge comptabilise la durée de visualisation des secondes émissions depuis la mise en service du récepteur.

17. Récepteur selon l'une quelconque des revendications 12 à 16 **caractérisé en ce qu'**il comporte en outre un détecteur de la présence de l'utilisateur à proximité de son récepteur, la comptabilisation de la durée de visualisation effective de secondes émissions étant arrêtée lorsque ledit détecteur ne détecte pas la présence de l'utilisateur.

18. Récepteur selon l'une quelconque des revendications 11 à 17 **caractérisé en ce qu'**il comporte en outre un moyen d'introduction du profil de l'utilisateur, le moyen de contrôle sélectionnant les secondes émissions mémorisées en fonction dudit profil.

19. Récepteur selon l'une quelconque des revendications 11 à 18 **caractérisé en ce qu'**il comporte un moyen de mélange des signaux visuels des premières et secondes émissions lues du moyen de mémorisation, de façon que le contenu visuel des émissions apparaisse en même temps sur un moyen d'affichage.

## Claims

1. Method of control of the displaying of audiovisual transmissions by a receiver furnished with a means of recording audiovisual transmissions, comprising the following steps:
- recording of at least one first transmission selected by the user;
and following an action by the user to display the first recorded transmission:
- reading of one at least second transmission pre-recorded in the recording means;
**characterized in that** it comprises the step of
- displaying of said second transmission before the end of the displaying of the first transmission for a duration stored in the receiver, the displaying of the second transmission being a condition for displaying the first transmission.

2. The method of control as claimed in claim 1, **characterized in that** the displaying of the first transmissions is performed in the course of successive periods, and **in that** the specified duration of display of the second transmission depends on the aggregated duration of display of the second transmissions already displayed in the course of the previous period.

3. The method of control as claimed in claim 1, **characterized in that** the displaying of the first transmissions is performed in the course of successive periods, and **in that** the specified duration of display of the second transmission depends on the aggregated duration of display of the second transmissions already displayed in the course of the current period.

4. The method of control as claimed in claim 1, **characterized in that** it comprises a step of counting the displaying of one at least second transmission, and a step of erasing said second transmission in memory of the receiver when the counter reaches a certain value.

5. The method of control as claimed in any one of the preceding claims, **characterized in that** it comprises a step of unrestricted display of the first recorded transmissions, **characterized in that** said step of unrestricted display intervenes after a specified time of usage, this time being specified when the receiver is brought into service by the user.

6. The method of control as claimed in claim 5, **characterized in that** the specified time of usage is calculated from the aggregate of the durations of display of second transmissions.

7. The method of control as claimed in claim 6, **characterized in that** the duration of display of a second transmission taken into account in the calculation of the aggregate increases when the second transmission is interactive.

8. The method of control as claimed in claim 6 or 7, **characterized in that** if furthermore comprises a step of detecting the presence of a user, the duration of display of second transmissions in the course of which an absence of user is detected is not taken into account in the calculation of the aggregate.

9. The method of control as claimed in any one of the preceding claims, **characterized in that** it furthermore comprises a step of entering a profile of the user, said profile filtering in the course of the step of reading the second transmissions a part at least of the second transmissions.

10. The method of control of the displaying of audiovisual transmissions by a receiver as claimed in any one of the preceding claims, **characterized in that** the second pre-recorded transmissions are adverts and **in that** the purchase price of said receiver drops as a function of the stored duration of display of the second transmissions.

11. A receiver (1) of audiovisual transmissions comprising a means of receiving first audiovisual transmissions (4, 5), a means of display (10) and a means of storage (9) for displaying and recording first audiovisual transmissions, said first transmissions being recorded subsequent to a command from the user, **characterized in that** it comprises a means of control (EE) associated with the means of storage (9), second transmissions being recorded by the means of control (EE) without intervention from the user, the means of control (EE) authorizing the reading and the displaying of the first transmissions if second transmissions are read and displayed before the end of the display of the first transmissions for a duration stored in the receiver.

12. The receiver as claimed in claim 11, **characterized in that** it comprises a counter of time of actual display of second transmissions in the course of successive periods, the specified duration of display of second transmissions depends on the duration of actual display in the course of the previous period.

13. The receiver as claimed in claim 11, **characterized in that** it comprises a counter of time of actual display of second transmissions in the course of successive periods, the specified duration of display of second transmissions depends on the duration of display of second transmissions, already performed in the course of the current period.

14. The receiver as claimed in claim 11, **characterized in that** it comprises a plurality of display counters associated with the second transmissions, and a means of erasing the second transmission when the associated counter reaches a predetermined value.

15. The receiver as claimed in any one of claims 11 to 14, **characterized in that** it comprises a clock making it possible to calculate the duration of usage of the receiver since the receiver was brought into service, the means of control authorizing the reading and the displaying of the first transmissions without instructing displaying of second transmissions when the duration of usage indicates that a specified time has elapsed.

16. The receiver as claimed in claim 15, **characterized in that** the clock meters the duration of display of the second transmissions since the receiver was brought into service.

17. The receiver as claimed in any one of claims 12 to 16, **characterized in that** it furthermore comprises a detector of the presence of the user in proximity to his receiver, the metering of the duration of actual display of second transmissions being halted when said detector does not detect the presence of the user.

18. The receiver as claimed in any one of claims 11 to 17, **characterized in that** it furthermore comprises a means of entering the profile of the user, the means of control selecting the second transmissions stored as a function of said profile.

19. The receiver as claimed in any one of claims 11 to 18, **characterized in that** it comprises a means of mixing the visual signals of the first and second transmissions read from the means of storage, in such a way that the visual content of the transmissions appears at the same time on a means of display.

## Patentansprüche

1. Verfahren zur Kontrolle der Anzeige von audiovisuellen Sendungen durch einen mit einem Mittel zur Aufzeichnung von audiovisuellen Sendungen versehenen Empfänger mit folgenden Schritten:
- Aufzeichnung mindestens einer ersten, von dem Benutzer ausgewählten Sendung, und
- in Anschluss an eine Aktion des Benutzers, um die erste aufgezeichnete Sendung anzuzeigen:
- Lesen mindestens einer zweiten voraufgezeichneten Sendung in dem Aufzeichnungsmittel;
**dadurch gekennzeichnet, dass** es den Schritt der Anzeige der zweiten Sendung vor dem Ende der Anzeige der ersten Sendung während einer in dem Empfänger gespeicherten Dauer umfasst, wobei die Anzeige der zweiten Sendung eine Voraussetzung für die Anzeige der ersten Sendung ist.

2. Kontrollverfahren nach Anspruch 1, **dadurch gekennzeichnet, dass** die Anzeige der ersten Sendungen während sukzessiver Perioden erfolgt und dass die bestimmte Dauer der Anzeige der zweiten Sendung von der kumulierten Dauer der Anzeige der zweiten, während der vorigen Periode bereits angezeigten Sendungen abhängt.

3. Kontrollverfahren nach Anspruch 1, **dadurch gekennzeichnet, dass** die Anzeige der ersten Sendungen während sukzessiver Perioden erfolgt und dass die bestimmte Dauer der Anzeige der zweiten Sendung von der kumulierten Dauer der Anzeige der zweiten, während der aktuellen Periode bereits angezeigten Sendungen abhängt.

4. Kontrollverfahren nach Anspruch 1, **dadurch gekennzeichnet, dass** es einen Schritt des Zählens der Anzeigen mindestens einer zweiten Sendung und einen Schritt des Löschens der zweiten Sendung in dem Speicher des Empfängers beim Erreichen eines bestimmten Werts durch den Zähler umfasst.

5. Kontrollverfahren nach einem der vorhergehenden Ansprüche, **dadurch gekennzeichnet, dass** es einen Schritt der freien Anzeige der ersten aufgezeichneten Sendungen umfasst und der Schritt der freien Anzeige nach einer bestimmten Nutzungsdauer erfolgt, wobei diese Dauer bei der Inbetriebnahme des Empfängers durch den Benutzer festgelegt wird.

6. Kontrollverfahren nach Anspruch 5, **dadurch gekennzeichnet, dass** die bestimmte Nutzungsdauer aufgrund der kumulierten Dauern der Anzeige von zweiten Sendungen berechnet wird.

7. Kontrollverfahren nach Anspruch 6, **dadurch gekennzeichnet, dass** die Dauer der Anzeige einer zweiten, bei der Berechnung der kumulierten Dauern berücksichtigten Sendung steigt, wenn die zweite Sendung interaktiv ist.

8. Kontrollverfahren nach einem der Ansprüche 6 oder 7, **dadurch gekennzeichnet, dass** es ferner einen Schritt des Erfassens der Benutzeranwesenheit umfasst, wobei die Dauer der Anzeige von zweiten Sendungen, während deren eine Benutzerabwesenheit erfasst wird, bei der Berechnung der kumulierten Dauern nicht berücksichtigt wird.

9. Kontrollverfahren nach einem der vorhergehenden Ansprüche, **dadurch gekennzeichnet, dass** es ferner einen Schritt der Eingabe eines Benutzerprofils umfasst, wobei das Profil während des Schritts des Lesens der zweiten Sendungen mindestens einen Teil der zweiten Sendungen filtert.

10. Verfahren zur Kontrolle der Anzeige von audiovisuellen Sendungen durch einen Empfänger nach einem der vorhergehenden Ansprüche, **dadurch gekennzeichnet, dass** es sich bei den zweiten voraufgezeichneten Sendungen um Werbesendungen handelt und dass der Kaufpreis des Empfängers in Abhängigkeit von der gespeicherten Dauer der Anzeige der zweiten Sendungen sinkt.

11. Empfänger (1) von audiovisuellen Sendungen mit einem Mittel für den Empfang erster audiovisueller Sendungen (4, 5), einem Anzeigemittel (10) und einem Speichermittel (9), um erste audiovisuelle Sendungen anzuzeigen und aufzuzeichnen, wobei die ersten Sendungen infolge eines Befehls des Benutzers aufgezeichnet werden, **dadurch gekennzeichnet, dass** er ein dem Speichermittel (9) zugeordnetes Kontrollmittel (ME) umfasst, wobei zweite Sendungen durch das Kontrollmittel (ME) ohne Eingreifen des Benutzers aufgezeichnet werden, wobei das Kontrollmittel (ME) das Lesen und die Anzeige der ersten Sendungen zulässt, wenn zweite Sendungen vor dem Ende der Anzeige der ersten Sendungen während einer in dem Empfänger gespeicherten Dauer gelesen und angezeigt werden.

12. Empfänger nach Anspruch 11, **dadurch gekennzeichnet, dass** er einen Zähler für die Dauer der effektiven Anzeige von zweiten Sendungen während sukzessiver Perioden umfasst, wobei die bestimmte Dauer der Anzeige von zweiten Sendungen von der Dauer der effektiven Anzeige während der vorigen Periode abhängt.

13. Empfänger nach Anspruch 11, **dadurch gekennzeichnet, dass** er einen Zähler für die Dauer der effektiven Anzeige von zweiten Sendungen während sukzessiver Perioden umfasst, wobei die bestimmte Dauer der Anzeige von zweiten Sendungen von der Dauer der während der laufenden Periode bereits erfolgten Anzeige von zweiten Sendungen abhängt.

14. Empfänger nach Anspruch 11, **dadurch gekennzeichnet, dass** er eine Vielzahl von den zweiten Sendungen zugeordneten Anzeigezählern und ein Mittel zum Löschen der zweiten Sendung beim Erreichen eines vorbestimmten Werts durch den zugeordneten Zähler umfasst.

15. Empfänger nach einem der Ansprüche 11 bis 14, **dadurch gekennzeichnet, dass** er eine Uhr umfasst, die das Berechnen der Dauer der Nutzung des Empfängers seit der Inbetriebnahme des Empfängers ermöglicht, wobei das Kontrollmittel das Lesen und die Anzeige der ersten Sendungen ohne eine Anzeige von zweiten Sendungen anzusteuern zulässt, wenn die Nutzungsdauer anzeigt, dass eine bestimmte Zeit verstrichen ist.

16. Empfänger nach Anspruch 15, **dadurch gekennzeichnet, dass** die Uhr die Dauer der Anzeige der zweiten Sendungen seit der Inbetriebnahme des Empfängers erfasst.

17. Empfänger nach einem der Ansprüche 12 bis 16, **dadurch gekennzeichnet, dass** er ferner einen Detektor der Anwesenheit des Benutzers in der Nähe dessen Empfängers umfasst, wobei das Erfassen der Dauer der effektiven Anzeige zweiter Sendungen gestoppt wird, wenn der Detektor die Anwesenheit des Benutzers nicht detektiert.

18. Empfänger nach einem der Ansprüche 11 bis 17, **dadurch gekennzeichnet, dass** er ferner ein Mittel zur Eingabe des Benutzerprofils umfasst, wobei das Kontrollmittel die zweiten gespeicherten Sendungen in Abhängigkeit von dem Profil auswählt.

19. Empfänger nach einem der Ansprüche 11 bis 18, **dadurch gekennzeichnet, dass** er ein Mittel zum Mischen der visuellen Signale der ersten und zweiten, von dem Speichermittel gelesenen Sendungen umfasst, so dass der visuelle Inhalt der Sendungen gleichzeitig an einem Anzeigemittel erscheint.
